(19) Europäisches Patentamt / European Patent Office / Office européen des brevets

(11) **EP 4 621 726 A1**

(12) **EUROPEAN PATENT APPLICATION**

(43) Date of publication:
**24.09.2025 Bulletin 2025/39**

(21) Application number: **24305430.1**

(22) Date of filing: **22.03.2024**

(51) International Patent Classification (IPC):
*G06V 10/25* (2022.01)    *G06V 10/74* (2022.01)
*G06V 10/764* (2022.01)    *G06V 10/774* (2022.01)
*G06V 10/778* (2022.01)    *G06V 10/82* (2022.01)
*G06V 20/40* (2022.01)    *G06V 20/70* (2022.01)

(52) Cooperative Patent Classification (CPC):
**G06V 20/46; G06V 10/25; G06V 10/761;
G06V 10/764; G06V 10/774; G06V 10/7792;
G06V 10/82; G06V 20/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Thales
92190 Meudon (FR)**

(72) Inventors:
• **Ziko, Imtiaz Masud
QUEBEC, G1P 4P5 (CA)**
• **Ahmad, Ola
QUEBEC, G1P 4P5 (CA)**

(74) Representative: **Lavoix
2, place d'Estienne d'Orves
75441 Paris Cedex 09 (FR)**

(54) **A FEW-SHOT ANNOTATION METHOD AND AN ASSOCIATED COMPUTER PROGRAM PRODUCT AND SYSTEM**

(57) The present invention concerns a few-shot annotation method comprising the following steps:
- providing (110) at least one query image and a set of support images;
- extracting (120) features from the query image and each of the support images using a same feature extractor;
- initializing (130) a scalar bias and a learnable prototype of the extracted features from the support images;
- for each pixel of the query image, determining (140) a probability that the pixel belongs to a foreground region or to a background region based on the learnable prototype and the scalar bias;
- fine-tuning (150) a loss function to learn the learnable prototype and the scalar bias, the loss function including a Laplacian term comprising an affinity matrix of dense pixel-wise affinity;
- annotating (160) the query image based on said probabilities.

FIG.2

EP 4 621 726 A1

**Description**

FIELD OF THE INVENTION

The present invention relates to a few-shot annotation method.

The invention also relates to a system and a computer program product associated to this method.

The present invention relates to the field of artificial intelligence, machine learning, deep neural network and computer vision carrying out an object detection model.

BACKGROUND OF THE INVENTION

Generally, according to methods known in the art, the object detection model is carried out on a neural network, with an architecture chosen based on number of layers, number of neurons per layer and activation functions, and parameters used in the various calculations. The parameter values are adjusted during a learning phase on digital training images forming a part of a training database. The learning phase is also called pre-training phase.

In the learning database, each digital training image is associated with an expected detection result, or ground truth. The pre-trained object detection model is configured to classify objects detected in several classes and to provide output digital data including a bounding box to enclose a detected object in a digital image.

Traditionally, object detection models demand substantial training data comprising a large volume of annotated images to achieve high accuracy. The annotation process is time-intensive. The implementation and parameter learning of object detection models are both time-consuming and expensive that consumes significant computational resources.

New object detection models generation, called "few-shot object detection models" or "few-shot annotation models" have emerged to detect new objects classes belonging to different classes with just a few annotated objects in a few images.

Few-shot object detection model is a machine learning method designed to detect objects in images with limited training data. Such a model is trained on a few examples of each object class and then uses the model to detect objects in new images. Few-shot object detection is configured to detect objects in an image with only a few training images.

Document "Few-Shot Object Detection: A Survey" by Köhler M. et al. published in 2021, discloses a review of few-shot object detection models. This survey provides an overview of state of the art of few-shot object detection models.

The few-shot object detection models are based on fine-tuning bounding box regressors, region proposal network (RPN) and on Faster-Region-based Convolutional Neural Network (RCNN) and You Only Look Once (YOLO) models.

Nevertheless, these methods are marked by a substantial investment of time and computational resources. Additionally, current few-shot detection models lack the capability to generate accurate bounding boxes, rendering them unsuitable for deployment as annotator systems in detection tasks.

There is a need for a solution that addresses these limitations and provides efficient and accurate annotation for diverse object detection models.

SUMMARY OF THE INVENTION

To this end, the subject matter of the invention is a few-shot annotation method comprising the following steps:

- providing at least one query image and a set of support images, the support images comprising bounding box annotations for a specific category of objects of interest;
- extracting features from the query image and each of the support images using a same feature extractor, the feature extractor being pre-trained on a separate dataset with annotations of different categories of objects;
- initializing a scalar bias and a learnable prototype of the extracted features from the support images;
- for each pixel of the query image, determining a probability that the pixel belongs to a foreground region or to a background region based on the learnable prototype and the scalar bias, the foreground region being related to at least one object of interest;
- fine-tuning a loss function to learn the learnable prototype and the scalar bias, the loss function including a Laplacian term comprising an affinity matrix of dense pixel-wise affinity;
- annotating the query image based on said probabilities.

The few-shot annotation method of the present disclosure is configured to create bounding box annotations based on a segmentation model. This eliminates the need to modify or fine-tune layers of specific deep learning detection network architectures. This method can be seamlessly applied on top of any pre-trained network model in a model-agnostic manner, without requiring changes to the underlying model. This offers flexibility in utilizing any pre-trained network for fine-tuning the few-shot object detection model.

The few-shot annotation method of the present disclosure eliminates the need for extensive annotation efforts, thereby accelerating the operational deployment of the object detection system and bypassing annotation bottlenecks and related costs.

According to other advantageous aspects of the invention, the method comprises one or several of the following features considered solely or according to any technically possible combinations:

- the step of annotating the query image comprises identifying connected components and drawing a bounding box around each connected component;
- a bounding box is drawn only if the average confidence of the pixels inside to belong to a foreground region is greater than a predetermined threshold;
- each of said probabilities is determined by a cosine similarity of each pixel of the query image to the learnable prototype;
- the scalar bias is initialized as the mean of the cosine similarities for all the pixels in the query image;
- the loss function further comprises a non-Laplacian term composed of a cross entropy term, an entropy term and a Kullback-Leibler (KL) divergence term;
- the Laplacian term is weighted in the loss function by a tunable parameter;
- the tunable parameter is configured to reinforce and/or refine annotating of the query image;
- the tunable parameter is fixed by a user for all iterations of said steps or is adjusted for each iteration of said step;
- the affinity matrix is defined for each pair of pixels of the query image and is equal to 1 if these pixels are within a k nearest neighbor of each other and to 0 otherwise;
- the steps of determining a probability that the pixel belongs to a foreground region or to a background region and of fine-tuning a loss function are iterated several times;
- the method further comprising a step of including the annotated query image to the set of support images, the other steps of the method being then reiterated for a new query image.

A further subject matter of the invention is a computer program product comprising software instructions which, when executed by a computer, implement the method as previously defined.

A further subject matter of the invention is a few-shot annotation system comprising means configured to carry out the method as previously defined.

BRIEF DESCRIPTION OF THE DRAWINGS

Features and advantages of the invention will become clearer upon reading the following description, given only as a non-limiting example, and made with reference to the enclosed drawings, wherein:

- Figure 1 is a schematic view of a few-shot annotation system according to the invention;
- Figure 2 is a flow chart of a few-shot annotation method according to the invention, the method being carried out by the system of Figure 1; and
- Figures 3 and 4 are different views illustrating at least some steps of the method of Figure 3.

DETAILED DESCRIPTION OF THE INVENTION

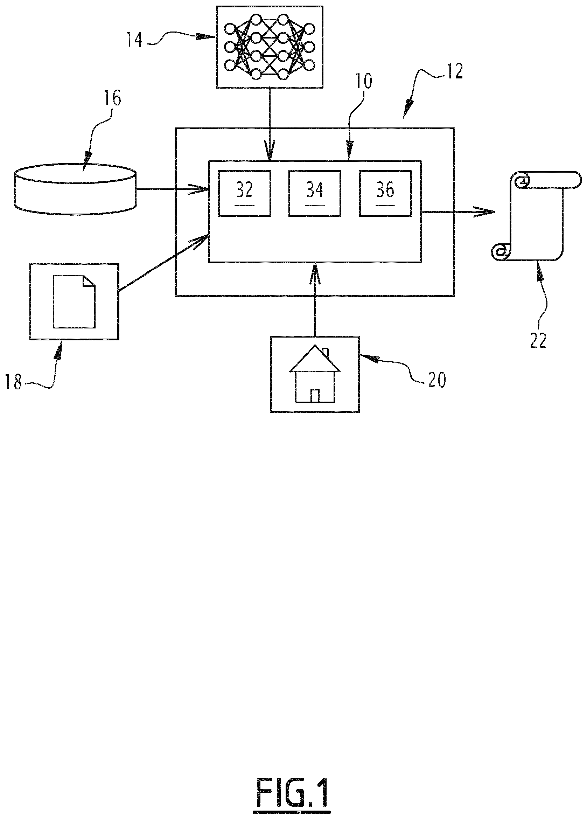

Figure 1 shows an artificial intelligence powered (AI-powered) system 12 comprising a few-shot annotation system 10 according to the invention.

The AI-powered system 12 is for example a vehicle or a flying device or other platform embedding the few-shot annotation system 10. Such an AI-powered system 12 can for example be controlled at least partially by an AI controller using different AI methods to carry out different functionalities of the AI-powered system 12. These functionalities may consist for example in moving the system 12, monitoring the environment of the system 12, controlling another system, etc.

The few-shot annotation system 10 is configured to carry out an object detection functionality of the AI-powered system 12.

Particularly, the few-shot annotation system 10 is configured to annotate an object of interest on a query image. The object of interest corresponds to an object of a specific category.

For this purpose, the few-shot annotation system 10 is connected to a pre-retrained object detection model 14, a support image database 16, a tunable parameter input module 18 and a query image input module 20.

The query image input module 20 is configured to provide to the few-shot annotation system 10 a query image.

The query image is an image containing at least one unlabeled object. The unlabeled object belongs to a category of objects for which the few-shot annotation system 10 has not been entrained yet. In other words, the category of objects is not yet known by the few-shot annotation system 10. The query image is for example a captured image, stream, frame, or batch structure. In some embodiments, the query image input module 20 can provide several query images forming for example a serious of video frames.

The query image input module 20 presents for example a camera able to provide an image from the environment of the AI-powered system 12 or any other module able to receive a previously captured image.

The tunable parameter input module 18 is configured to provide a tunable parameter which is able to refine and/or reinforce the annotations done by the few-shot annotation system 10, as it will be explained in further detail below. The tunable parameter can be fixed for each query image or be adjustable for example by the user during the operation of the few-shot annotation system 10 for a given query image. The tunable parameter input module 18 presents for example a human-machine interface allowing to the user adjusting the tunable parameter.

The support image database 16 comprises at least one, advantageously at least a few support images usable by the few-shot annotation system 10. Particularly, each support image comprises at least one annotated object for the same category of objects as the object of interest of the query image. Advantageously, each annotation comprises a bounding box drawn around the corresponding object.

The pre-trained object detection model 14 is a model which has been previously trained to detect objects of one or several categories which are different from the category of the object of interest.

The pre-trained object detection model 14 is for example stored in a distant server not embedded in the in the AI-powered system 12.

The pre-trained object detection model 14 is configured to extract features from an image using a feature extractor and to classify detected objects in at least one object category for which it has been trained.

The pre-trained object detection model 14 is implemented on a deep neural network architecture and can be tuned using parameters. The parameters are adjustable during a pre-training learning phase on digital training images from a training dataset. The training dataset contains for example thousands of annotated images.

In the example shown in Figure 1, the few-shot annotation system 10 comprises an input module 32, a processing module 34 and an output module 36. Each of these modules is for example implemented in the form of a software program, or of a software brick, which can be executed by a processor. A memory of the object detection system 10 is then adapted to store these modules and a processor of the object detection system 10 is adapted to execute these programs.

Alternatively, at least one of the above-mentioned modules 32 to 36 is implemented at least partially in the form of a programmable logic component, such as an FPGA (Field Programmable Gate Array), or further in the form of an integrated circuit, such as an ASIC (Application Specific Integrated Circuit).

When at least one of the above-mentioned modules 32 to 36 is implemented in the form of one or a plurality of software programs, i.e. in the form of a computer program, it is further apt to be recorded on a computer-readable medium (not shown). The computer-readable medium, e.g. a medium apt to store the electronic instructions, is to be coupled to a bus of a computer system. As an example, the readable medium is an optical disk, a magneto disk, a ROM memory, a RAM memory, any type of non-volatile memory (e.g. EPROM, EEPROM, FLASH, NVRAM), a magnetic card or an optical card. A computer program containing software instructions is then stored on the readable medium.

The input module 32 is configured to receive data from the pre-trained object detection model 14, the support images database 16, the tunable parameter input module 18 and the query image input module 20. The input module 32 is further configured to transfer this data to the processing module 34.

The processing module 34 is configured process the input data in order to annotate the query image, as it will be explained in further detail below. The annotated query image comprises for example at least one bounding box drawn around the object of interest. The processing module 34 is further configured to transfer annotation results to the output module 36.

The output module 36 is configured to provide the annotation results to an external system 22. The external system 22 presents for example a server able to store the query image together with the annotations of the object of interest. Alternatively, the external system 22 can for example present a screen or any other human-machine interface displaying the query image with one or several bounding boxes to the user.

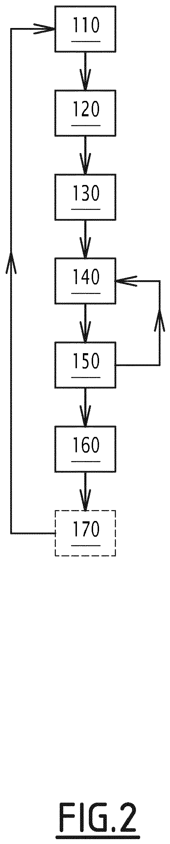

The object detection system 10 is configured to carry out a few-shot annotation method object detection method which will be now explained in reference to Figure 2.

During the initial step 110, the input module 32 receives the query image from the query image input module 20 and a set of support images from the support image database 16. It also receives the tunable parameter and the feature extractor respectively from the tunable parameter input module 18 and the pre-trained object detection model 14

The input module 32 transfers then this data to the processing module 34.

It will be considered in the following that the set of support images comprises K support images where $K \geq 1$. The

$$S = \left\{ (\mathbf{x}_s, y_s) \right\}_{s=1}^{K}$$

set of support images can thus be denoted as where $x_s$ is a support image and $y_s$ is the ground truth bounding box coordinates of the objects of the same category as the object interest in this support image $x_s$. It is also

considered that size of each support image is of $H \times W \times C$ (resp. height, width and number of image channels).

As for the query image, it will be denoted $x_q$. The size of this query image is $h \times w \times c$ where $h,w$ and c are the downsampled height and width and the number of feature dimensions respectively.

During the next step 120, the processing module 34 extracts features from the query image and each of the support images using the feature extractor. By denoting the feature extractor as $f(\theta)$, during this step, the following features are determined:

$$\mathbf{f}_s = f(\theta)(x_s),$$

$$\mathbf{f}_q = f(\theta)(x_q).$$

During the next step 130, the processing module 35 initializes a scalar bias $b^0$ and a learnable prototype $\mathbf{m}^0 \in \mathbb{R}^c$ of the extracted foreground pixel features $\mathbf{f}_s$ inside the downsampled support set bounding boxes.

The initial scalar bias $b^0$ is computed for example as the mean of the output cosine similarity for all the pixels in the query image.

During the next step 140, the processing module 34 determines for each pixel of the query image a probability that this pixel belongs to a foreground region or to a background region based on the learnable prototype and the scalar bias. As used in the following, a foreground region designates any region of the image which is related to at least one object of interest. Accordingly, a background region designates any region which is not related to at least one object of interest.

Advantageously, each probability is determined by a cosine similarity of the corresponding pixel of the query image to the learnable prototype.

Particularly, in this case, the probability of a pixel j to belong to a foreground region is expressed as follows:

$$\mathrm{p}_f^{(t)}(j) = sigmoid(\tau[\cos(\mathbf{f}_q(j), \mathbf{m}^{(t)})\,\mathrm{b}^{(t)}])$$

where $t$ designates the number of iterations of this step (initially $t = 0$) and $\tau$ is a temperature parameter which can for example be chosen before executing the method.

Accordingly, the probability of a pixel j to belong to a background region is expressed as follows:

$$\mathrm{p}_b^{(t)}(j) = 1 - \mathrm{p}_f^{(t)}(j).$$

The total probability simplex for a pixel j of an image is simply stacking background and foreground probabilities as:

$$\mathbf{p}(j) = \left[\mathrm{p}_b^{(t)}(j), \mathrm{p}_f^{(t)}(j)\right].$$

In the following, when $\mathbf{p}(j)$ is used with the index $s$, it relates to a support image and when it is used with the index $q$, it relates to the query image.

During the next step 150, the processing module 34 fine-tunes a loss function to learn the learnable prototype and the scalar bias. In other words, this step consists in learning the learnable prototype and the scalar bias to improve the prediction of each pixel of the query image to belong to either a foreground region or a background region.

Particularly, according to the present example, the following fine-tuning is proposed:

$$min_{\mathbf{m},\mathrm{b}} L_{Repri} + \lambda L_{Lap}$$

where:

- $L_{Repri}$ is a non-Laplacian term;
- $\lambda$ is the tunable parameter;
- $L_{Lap}$ is a Laplacian term.

The non-Laplacian term $L_{Repri}$ allows creation of segmentation masks and is composed of a cross entropy term, an entropy term and a Kullback-Leibler (KL) divergence term. In other words, the non-Laplacian term $L_{Repri}$ can be expressed as follows:

$$L_{Repri} = CE + \frac{1}{K}\mathcal{H} + \frac{1}{K}\mathcal{D}_{KL}$$

where:

- $CE$ is the cross entropy term;

- $\mathcal{H}$ is the entropy term;

- $\mathcal{D}_{KL}$ is Kullback-Leibler (KL) divergence term.

The cross entropy $CE$ is the average cross entropy between the estimated probability of each pixel in the support image and their corresponding one-hot pixel ground-truth $\tilde{y}_s(j)$ (i.e., the average pixel-wise cross entropy). The ground-truth vector $\tilde{y}_s(j)$ will have 1 in a foreground position if the pixel $j$ is inside the bounding box region and 0 in the background position, otherwise the background position will have 1, and the foreground will be 0.

The cross entropy $CE$ can be thus expressed as follows:

$$CE = -\frac{1}{K \times h \times w}\sum_{s=1}^{K}\sum_{j} \tilde{y}_s(j)^{\top} \log(\mathbf{p}_s(j)).$$

The entropy term $\mathcal{H}$ is the entropy of prediction on query image pixels:

$$\mathcal{H} = -\frac{1}{h \times w}\sum_{j} \mathbf{p}_q(j) \log\left(\mathbf{p}_q(j)\right).$$

The Kullback-Leibler (KL) divergence term $\mathcal{D}_{KL}$ that encourages the estimated background/foreground proportion $\widehat{\mathbf{p}_q} = \frac{1}{h \times w}\sum_{j} \mathbf{p}_q(j)$ to match a prior proportion $\pi \in [0, 1]^2$. This term avoids the degenerate solutions in the minimization of the other loss terms. The prior proportion $\pi$ is initialized from the estimated probabilities for foreground and background (of the support set) or could be given as uniform probabilities. The Kullback-Leibler (KL) divergence term $\mathcal{D}_{KL}$ is thus defined as follows:

$$\mathcal{D}_{KL} = \widehat{\mathbf{p}_q}^{\top} \log\left(\frac{\widehat{\mathbf{p}_q}}{\pi}\right).$$

The Laplacian term $L_{Lap}$ regulates the estimated probabilities to either reinforce or refine the bounding box estimations. In other words, Laplacian term $L_{Lap}$ allows separation of the background regions from the foreground regions. It can be expressed as follows:

$$L_{Lap} = \sum_{l=1}^{2} \frac{P_l^T A P_l}{R}$$

where:

- $A$ is an affinity matrix of dense pixel-wise affinity;
- $P_l$ is a probability matrix;

- *R* is a normalization term to either reinforce or refine the bounding box estimations.

The affinity matrix *A* is defined for each pair of pixels (*i,j*) of the query image. Particularly, if the pixels (*i, j*) are within the *k* nearest neighbor of each other, then *A*(*i, j*) = 1. Otherwise, *A*(*i, j*) = 0.

The probability matrix $P_l$ is determined as follows:

$$\mathrm{P}_l = [..\mathbf{p}_q[l](j)..], \forall j$$

where all the pixel probabilities for either foreground or background regions indicated by *l*. If *l* = 1, it contains all the background probabilities and if *l* = 2, it contains the foreground probabilities.

The normalization term *R* can be chosen as $R = \mathbf{d}^\top P_l$ to make normalized cut based Laplacian term which is used to reinforce pixel confidence to detect them as potential bounding box. Here $\mathbf{d} = \Sigma_j A(:, j)$ is the degree matrix.

During this step, the Laplacian term is computed for each single data point from its corresponding segmentation mask that defines the probabilities of background and foreground objects. In this setting, it is not required that the data points to be of different classes, but pixels of a single image either belong to a foreground (object) or background, which makes the algorithm more generic and adaptable to bounding box detection tasks.

The Laplacian term $L_{Lap}$ is weighted by the tunable parameter $\lambda$ which can vary for example from 0 to 1. Advantageously, the tunable parameter $\lambda$ is non-zero. The tunable parameter A is used to reinforce or refine bounding box estimations on the query image.

The steps 140 and 150 can be iterated several times to fine-tune the learnable prototype and the scalar bias. Thus, the prediction of the probabilities of each pixel of the query image to belong to either a foreground region or a background region can be increased.

During the following step 160, the processing module 34 annotates the query image based on the probabilities determined during the step 140.

Particularly, these probabilities form a binary mask where each pixel belongs to a foreground region if the corresponding probability is greater than a certain threshold or to a background region otherwise.

To annotate the query image, the processing module 34 first identifies connected components and then, draws a bounding box around each connected component with acceptable confidence threshold. For example, if confidence threshold is set as 0,7, only those bounding boxes will be returned if the average confidence of estimated pixels inside bounding boxes is higher or equal to 70 percent of probabilities. Doing so, the false positives can be removed, and only confident bounding boxes will be used for annotation.

At the end of this step, the annotated query image is transferred to the output module 36 and the output module 36 transfers it to the external system 22.

The method can further comprise an optional step 170. During this step, the output module 36 adds the annotated query image to the set of the support images and the method can be carried out for a new query image using the enriched set of the support images.

This is for example particularly advantageous when the query images present video frames that are needed to be annotated.

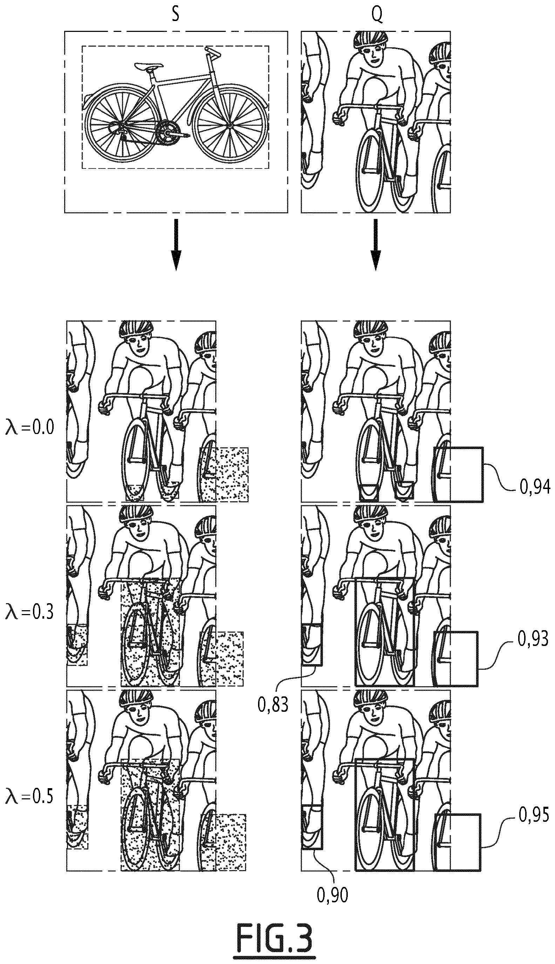

Figure 3 shows annotation results obtained by the few-shot annotation method applied to a support image S comprising an annotated bicycle (i.e. specific category of objects) and a query image Q with an unlabeled bicycle (i.e. object of interest).

As it can be seen in this Figure, when the tunable parameter $\lambda$ is 0, only a portion of the center bicycle has been found in the query image. With increasing the tunable parameter, the method has also identified a bigger portion of the center bicycle and a portion of the left bicycle. With further increasing of the tunable parameter, the confidence level of the bounding boxes can also be increased (for example 0,83 vs 0,90 for the left bounding box when the tunable parameter $\lambda$ is increased from 0,3 to 0,5).

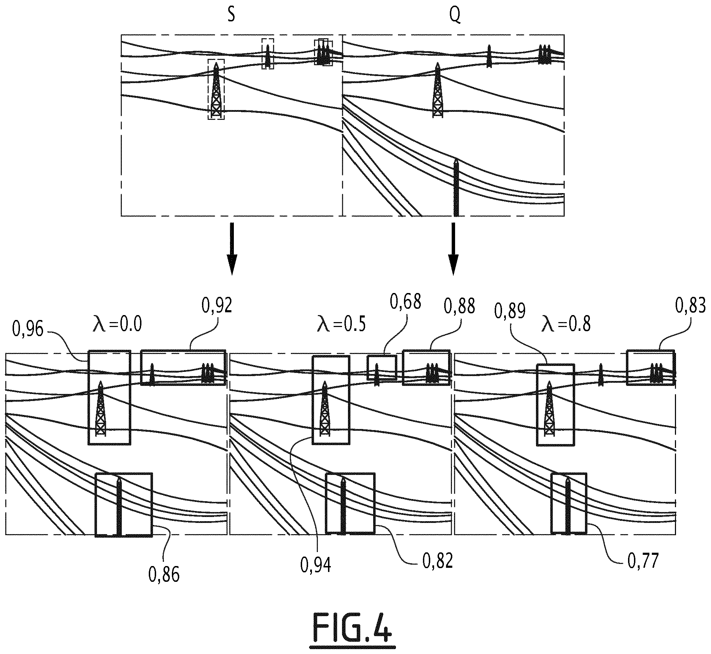

Figure 4 shows annotation results obtained by the few-shot annotation method applied to a support image S comprising a plurality of pylons (i.e. specific category of objects) and a query image Q with a plurality of unlabeled pylons (i.e. objects of interest).

This figure shows that with increased value of the tunable parameter $\lambda$, the method finds the refined bounding box annotations. It is worth to observe that the top right big bounding box with $\lambda = 0$ is broken down to individual bounding boxes to detect them separately with increased $\lambda = 0,5$. The more refinement retains only confident fitted bounding boxes around the objects (here pylons).

The proposed solution addresses the costly bottleneck of annotating a large number of unlabeled images with bounding boxes for objects of interest. By avoiding the high cost associated with annotation creation, the few-show annotation method according to the invention facilitates flexible generation of bounding box annotations for object detection applications, effectively accelerating progress of development and deployment by circumventing annotation hurdles. Furthermore, the proposed solution can be used on query images collected from new environments different from the domain of the support set.

The few-shot annotation method according to the invention is adapted to generate bounding box annotations based on a segmentation model unlike previous methods which mostly require to fine-tune the detection model layers directly for bounding box regressors and classifiers like in YOLO or Faster RCNN architecture. The proposed approach eliminates the need to modify or fine-tune specific layers of a deep neural network architecture trained for detection. Instead, the few-shot annotation method can be employed on top of any pre-trained neural network in a model-agnostic manner without modifying the pre-trained model itself. This provides the flexibility to utilize any pre-trained model for fine-tuning our few-shot detector (or annotator) model.

Additionally, only a single tunable parameter to enhance pixel confidence is used. This tunable parameter influences the inclusion of pixels in the bounding box annotation. Adjusting this parameter allows for tighter refinement of the proposed bounding box annotations. Moreover, it enables the selection of only those bounding boxes that surpass a given confidence threshold, thereby preventing false positive annotations.

This is achieved by addition of the Laplacian term in the loss function. This adds the possibility to refine/reinforce the detected bounding boxes to bring it as detected objects and then to refine to fit the object by simply modifying this parameter.

**Claims**

1. A few-shot annotation method comprising the following steps:

   - providing (110) at least one query image and a set of support images, the support images comprising bounding box annotations for a specific category of objects of interest;
   - extracting (120) features from the query image and each of the support images using a same feature extractor, the feature extractor being pre-trained on a separate dataset with annotations of different categories of objects;
   - initializing (130) a scalar bias and a learnable prototype of the extracted features from the support images;
   - for each pixel of the query image, determining (140) a probability that the pixel belongs to a foreground region or to a background region based on the learnable prototype and the scalar bias, the foreground region being related to at least one object of interest;
   - fine-tuning (150) a loss function to learn the learnable prototype and the scalar bias, the loss function including a Laplacian term comprising an affinity matrix of dense pixel-wise affinity;
   - annotating (160) the query image based on said probabilities.

2. The method according to claim 1, wherein the step (160) of annotating the query image comprises identifying connected components and drawing a bounding box around each connected component.

3. The method according to claim 2, wherein a bounding box is drawn only if the average confidence of the pixels inside to belong to a foreground region is greater than a predetermined threshold.

4. The method according to any one of the preceding claims, wherein each of said probabilities is determined by a cosine similarity of each pixel of the query image to the learnable prototype.

5. The method according to claim 4, wherein the scalar bias is initialized as the mean of the cosine similarities for all the pixels in the query image.

6. The method according to any one of the preceding claims, wherein the loss function further comprises a non-Laplacian term composed of a cross entropy term, an entropy term and a Kullback-Leibler (KL) divergence term.

7. The method according to any one of the preceding claims, wherein the Laplacian term is weighted in the loss function by a tunable parameter.

8. The method according to claim 7, wherein the tunable parameter is configured to reinforce and/or refine annotating of the query image.

9. The method according to claim 7 or 8, wherein the tunable parameter is fixed by a user for all iterations of said steps or is adjusted for each iteration of said step.

10. The method according to any one of the preceding claims, wherein the affinity matrix is defined for each pair of pixels of the query image and is equal to 1 if these pixels are within a k nearest neighbor of each other and to 0 otherwise.

11. The method according to any one of the preceding claims, wherein the steps (140, 150) of determining a probability that the pixel belongs to a foreground region or to a background region and of fine-tuning a loss function are iterated several times.

12. The method according to any one of the preceding claims, further comprising a step (170) of including the annotated query image to the set of support images, the other steps of the method being then reiterated for a new query image.

13. A computer program product including software instructions which, when executed by a computer, implement the method according to any one of the preceding claims.

14. A few-shot annotation system (10) comprising means (32, 34, 36) configured to carry out the method according to any one of claims 1 to 12.

FIG.1

FIG.2

FIG.3

FIG.4

Europäisches
Patentamt

European
Patent Office

Office européen
des brevets

# EUROPEAN SEARCH REPORT

**Application Number**

EP 24 30 5430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ELLIOTT SKOMSKI ET AL: "Prototypical Region Proposal Networks for Few-Shot Localization and Classification", ARXIV.ORG, CORNELL UNIVERSITY LIBRARY, 201 OLIN LIBRARY CORNELL UNIVERSITY ITHACA, NY 14853, 8 April 2021 (2021-04-08), XP081934210, | 1-5,7-14 | INV. G06V10/25 G06V10/74 G06V10/764 G06V10/774 G06V10/778 G06V10/82 G06V20/40 G06V20/70 |
| Y | * the whole document * | 6 | |
| Y | ZHOU BOJUN ET AL: "Enhancing Few-Shot Learning in Lightweight Models via Dual-Faceted Knowledge Distillation", SENSORS, [Online] vol. 24, no. 6, 12 March 2024 (2024-03-12) , page 1815, XP093198713, CH ISSN: 1424-8220, DOI: 10.3390/s24061815 Retrieved from the Internet: URL:https://www.mdpi.com/1424-8220/24/6/1815/pdf> [retrieved on 2024-08-27] * the whole document * | 6 | |
| | | | **TECHNICAL FIELDS SEARCHED (IPC)** |
| | | | G06V |
| A | HUANG LIAN ET AL: "Few-shot object detection with affinity relation reasoning", JOURNAL OF ELECTRONIC IMAGING, S P I E - INTERNATIONAL SOCIETY FOR OPTICAL ENGINEERING, US, vol. 31, no. 3, 1 May 2022 (2022-05-01), page 33016, XP060159651, ISSN: 1017-9909, DOI: 10.1117/1.JEI.31.3.033016 [retrieved on 2022-05-20] * the whole document * | 1-14 | |

-/--

The present search report has been drawn up for all claims

| Place of search | Date of completion of the search | Examiner |
|---|---|---|
| The Hague | 27 August 2024 | Martinière, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 30 5430

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HSIEH HE-YEN ET AL: "Aggregating Bilateral Attention for Few-Shot Instance Localization", 2023 IEEE/CVF WINTER CONFERENCE ON APPLICATIONS OF COMPUTER VISION (WACV), IEEE, 2 January 2023 (2023-01-02), pages 6314-6323, XP034291052, DOI: 10.1109/WACV56688.2023.00626 [retrieved on 2023-02-06] * the whole document * ----- | 1-14 | |

TECHNICAL FIELDS
SEARCHED (IPC)

The present search report has been drawn up for all claims

| Place of search | Date of completion of the search | Examiner |
|---|---|---|
| The Hague | 27 August 2024 | Martinière, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KÖHLER M. et al.** *Few-Shot Object Detection: A Survey*, 2021